# EUROPEAN PATENT SPECIFICATION

(11) **EP 2 631 729 B1**
(45) Date of publication and mention of the grant of the patent: **08.06.2016**
(21) Application number: 12157083.2
(22) Date of filing: 27.02.2012
(51) Int. Cl.: G05D 1/02

(54) **Apparatus and method for drive path search**
Vorrichtung und Verfahren zum Suchen eines Fahrverlaufs
Appareil et méthode pour la recherche d'une trajectoire de guidage

(43) Date of publication of application: 28.08.2013
(73) Proprietor: Sandvik Mining and Construction Oy, 33330 Tampere (FI)
(72) Inventor: Ryynänen, Joonas, 00100 Helsinki (FI)
(74) Representative: Smolander, Jouni Juhani

(56) References cited:
- WO-A1-2010/149851
- US-A- 5 684 696
- STEVEN SCHEDING ET AL: "An Experiment in Autonomous Navigation of an Underground Mining Vehicle", IEEE TRANSACTIONS ON ROBOTICS AND AUTOMATION, IEEE INC, NEW YORK, US, vol. 15, no. 1, 1 February 1999 (1999-02-01), XP011053367, ISSN: 1042-296X
- BERGLUND T ET AL: "Planning Smooth and Obstacle-Avoiding B-Spline Paths for Autonomous Mining Vehicles", IEEE TRANSACTIONS ON AUTOMATION SCIENCE AND ENGINEERING, IEEE SERVICE CENTER, NEW YORK, NY, US, vol. 7, no. 1, 1 January 2010 (2010-01-01) , pages 167-172, XP011331883, ISSN: 1545-5955, DOI: 10.1109/TASE.2009.2015886

## Description

### Background of the invention

The invention relates to an automatic drive of a mining vehicle in a mine, and particularly to searching for in a data processing device a drive path for the automatic drive of a mining vehicle from a start point to a goal point in a mine.

The invention further relates to a method for finding a drive path for a mining vehicle in a mine.

The field of the invention is defined more specifically in the preambles of the independent claims.

In mines, various mining vehicles, i.e. mobile mining machines, are used. Typical mining vehicles are rock drilling rigs, bolting vehicles, charging devices, loading vehicles, transport vehicles and measuring vehicles. In an automated mine, these vehicles can be unmanned and they can be driven automatically along a predetermined route in a mine. The mining vehicle is provided with means to determine the current location. When the automated mining vehicle is driven off the route, it may be difficult to return the vehicle back to the route.

WO2010/149851 discloses a method in which a route for automatically controlling a mobile mining machine, comprising: retrieving an environment model comprising wall location data, receiving from a user at least an input for determining a starting point of the route and an input for determining an end point of the route, determining the route between the starting point and the end point on the basis of the environment model and data concerning properties of the mining machine, wherein the route is determined as route points at least for which position data are calculated, and storing the data determining the route to be used for automatically guiding the mining machine.

### Brief description of the invention

An object of the invention is to provide a novel and improved apparatus and method for finding a drive path for an automatic drive of a mining vehicle in a mine.

The mining vehicle according to the invention is characterized in that the apparatus is configured to: receive data on actual initial position and orientation of the mining vehicle in the mine and input this data as the start point of the drive path; experiment on several different steering movements of the mining vehicle relative to the driving movements to find at least one steering sequence satisfying a collision-free drive path from the start point to the goal point; select one created steering sequence for executing the found drive path completely, and return, on the basis of the selected steering sequence, the mining vehicle back to a main route in order to continue automatic main drive.

The method according to the invention is characterized by receiving actual initial position and orientation data of the mining vehicle in the mine and feeding this data as the start point for the drive path; experimenting on several different steering movements of the mining vehicle relative to the driving movements to find at least one steering sequence satisfying a collision-free drive path from the start point to the goal point; selecting one created steering sequence for executing the found drive path completely, and returning, on the basis of the selected steering sequence, the mining vehicle back to a main route in order to continue automatic main drive.

An idea of the disclosed solution is that a single-use drive path is generated for a mining vehicle, arranged to drive in the mine automatically along a pre-determined main route including a plurality of route points, to return the mining vehicle back to the main route in order to continue the automatic main drive. A start point for the drive path to be formed is defined by determining an actual initial position and orientation of the mine vehicle in the mine. As a goal or target point for the drive path, one pre-determined point in the mine is determined. The goal point includes at least position data. The drive path is generated in a path generator including at least one processor wherein a path search process, or algorithm, is implemented. The path search process employs a kinematic model of the mining vehicle and an environment model of the mine and searches for feasible collision-free drive paths between the starting point and the goal point. In the drive path search process, several different steering movements relative to driving movements are experimented on in order to find one or more drive path steering sequences allowing a collision-free drive to the chosen goal point in the mine. A collision avoidance examination is applied. As a result of the path search, at least one complete steering sequence is formed in advance for the drive. The created steering sequence defines steering movements as a function of the driving distance. When executing the steering sequence, the distance driven is determined by measuring means of the mining vehicle.

An advantage of the disclosed solution is that a drive path is generated for each specific situation, which means that the drive path is of a single-use type. This way, the drive path is always generated by taking into account the accurate initial position and orientation of the mining vehicle. The generated and accepted drive path is reliable, because the drive path is completely formed before the mining vehicle executes the drive. Thus, any difficulties are taken into account already before the start of the drive and no interruptions occur during the drive. One more benefit is that the steering sequence of the drive path determines the steering movements as a function of distance, whereby the driving speed does not affect the control of the drive. This simplifies the control procedure. In the disclosed solution, the drive path can be defined without creating any route points provided with position data, such as coordinates.

According to an embodiment, a steering sequence is generated for driving a mining vehicle in a mine automatically from a first mine work point to a second mine work point. In the first mine work point, the mining vehicle is operated under manual control and when the operator has completed the manual operations, the path search algorithm is started. The mining vehicle may have a random initial position and orientation after the manual operations. The mining vehicle can be transfer driven from the first mine work point to the second work point by executing the created steering sequence in a control unit of the mining vehicle. The mining vehicle may be a loading vehicle, which is arranged to drive in the mine between a loading point and an unloading point. Loading a bucket of the loading vehicle is a demanding task and difficult to automate. Therefore, the bucket may be filled by driving the vehicle towards a rock pile manually and simultaneously controlling the movements of the bucket manually. After the bucket has been filled, the manual operation can be stopped and the path search algorithm can be started. The path search process determines the initial position and orientation of the mining vehicle at the loading point, whereby a start point is defined. As a goal point for the search, pre-determined position data of the unloading point is used. On the basis of the start point location and orientation, goal point position data, a mining vehicle specific kinematic model and an environment model of the mine, the path search algorithm creates a single-use steering sequence before starting the transfer drive. Thus, the loading vehicle can be driven under automatic control from the rock pile or loading chute to the unloading chute or conveying system without needing a pre-determined route.

According to an embodiment, in order to automatically drive the mine vehicle back to the main route, a single-use return path is generated and selected before the return drive is started. In this embodiment, one route point of the main route is selected as a goal point for the return path. The selected route point includes position data.

According to an embodiment, the mining vehicle is driven intentionally away from the main route in order to perform mining work in a mining work area located outside the main route. The mining vehicle can be driven to the mining work area under the control of an operator. The operator may drive the mining vehicle under remote control from a control room located outside the mine, whereby the control commands are transmitted to the control unit of the mine vehicle via data communication means and the operator is provided with visual data of the mining work area. The mining vehicle may also include sensors and measuring devices for producing further information for the manual drive. The mining vehicle is provided with a teleoperation mode for the manual drive. The automatic return drive releases the operator for other tasks.

According to an embodiment, the control system is arranged to return the mining vehicle back to the pre-determined main route when the mining vehicle has unexpectedly diverged from the route. Such a situation may occur as a result of malfunction in the navigation system or automatic drive controlling system of the mining vehicle, or possibly also when executing sudden steering movements in order to avoid collision with other mining vehicles or collapsed or dropped rock blocks. Thanks to this embodiment the mining vehicle can be restored to the main route for continuing the automatic production drive after an unexpected incident. This improves the operational reliability of the automatic mining system.

According to an embodiment, the disclosed system is intended for underground mines having tunnels and other rock caverns where the mine vehicles can be driven for executing pre-determined mine work in mine working areas. The mine vehicles can be driven along the main route for transport or production drive.

According to an embodiment, the disclosed system is used in block caving where ore body is undercut and the ore caves naturally downwards a vertical rise. In this method gravitational flow of ore is utilized. The mine vehicle is a loading vehicle which is driven under manual control from the main route to a branching loading tunnel for loading a bucket and is thereafter reverse driven automatically according to the generated steering sequence back to the main route.

According to an embodiment, the path generation algorithm is intended for a short driving distance. The length of the drive path is typically less than 100 meters. When the mine vehicle diverges from a main route, the return route may be only 10 to 40 meters.

According to an embodiment, rock surfaces around the mining vehicle are scanned and the scanning data is compared with an environment model of the mine when determining the distance driven during the return drive. A benefit of this type of distance measurement is that a possible slippage of the wheels and an uneven driving surface have no influence on the measurement accuracy. This allows exact steering movements during the drive along the generated path.

According to an embodiment, a route is generated on the basis of the generated drive path steering sequence. The route includes several route points at an interval from each other. Each route point includes position data, such as coordinates in a coordinate system. Contrary to the route, the driving sequence does not define any route points provided with coordinate data.

According to an embodiment, the drive path steering sequence is stored only into a short-term memory since the sequence is for single-use purpose only. The steering sequence may be deleted from the memory after being executed by the control unit of the mining vehicle. The steering sequence may be stored temporarily in a transient computer-readable memory.

According to an embodiment, the goal point is determined by the operator and is then input into the drive path searching process.

According to an embodiment, the data relating to the goal point includes data on the final orientation of the mining vehicle. This way, it is possible to drive the mining vehicle so that the succeeding automatic driving can be started smoothly.

According to an embodiment, the goal point is determined by the drive path search algorithm, which may include a control strategy or rules to select the goal point among pre-determined points. The search algorithm may update the selection of the goal point during the search process. This way, the search process may be started with a first goal point or target group of goal points, but can be changed to a second goal point when the algorithm determines during the path generation process, that by selecting the second goal point a better end result can be achieved. The update of the goal point may allow a better final orientation of the mining vehicle to be achieved, for example.

According to an embodiment, an initial position and orientation of the mining vehicle are determined by one or more measuring devices arranged in the mining vehicle.

According to an embodiment, at least an initial position, and possibly also the orientation, of the mining vehicle is determined by scanning the surrounding wall surfaces of the mine and comparing the results with a pre-stored environment model. This way, the start point for the return path is determined without fixed infrastructure and is based on surface profiles or contours of the mine.

According to an embodiment, an initial orientation of the mining vehicle is defined by means of a gyroscope or similar measuring device.

According to an embodiment, an initial position and orientation of the mining vehicle are determined by one or more measuring devices arranged external to the mining vehicle. The measuring device can be arranged at a mining work point, such as a loading point, and measuring data can be communicated to the drive path generator by means of a data communication device.

According to an embodiment, the drive path search algorithm employs a mine vehicle-specific kinematic model, referring generally to data representing kinematic properties of the mining vehicle, which may be formed in advance. Depending on the operational principle and type of the mining vehicle, outer dimensions, layout and steering principle and mechanism, for example, a kinematic model is created for the mine vehicles included in the automatic control system. In principle, a kinematic model can be formed for all kinds of mining vehicles. Thus, the disclosed path search procedure can be applied widely for different mine vehicles having specific kinematic models.

According to an embodiment, the drive path search algorithm retrieves a mine vehicle specific kinematic model or kinematic data which is formed in advance and stored in a data file.

According to an embodiment, a mine vehicle-specific kinematic model or kinematic data is formed in advance and is included in the drive path search algorithm.

According to an embodiment, the environment model is pre-formed, and is stored in at least one memory device or media. The path search apparatus retrieves the environment model, and employs it when generating a drive path. The environment model can be defined by driving a scouting or measuring vehicle in the mine, and by scanning wall profiles simultaneously.

According to an embodiment, the environment model is formed by means of scanners or other suitable measuring devices of the mining vehicle before starting the search algorithm. This embodiment can be applied in situations, where the distance between the start point and the goal point is relatively short and visibility is good. Thus, in this embodiment, there is no need to retrieve any pre-formed environment model from a memory.

According to an embodiment, the mining vehicle is a loading vehicle, which is a special type of a wheel loader comprising a bucket at its front end for transporting and loading excavated rock material. Further, the loading vehicle is frame-steered, whereby it is provided with a front frame and a rear frame and a centre pivot between the frame parts. Such a loading vehicle is steered by turning the frame parts relative to each other by means of steering cylinders, for example. The frame parts include wheels which are not turned relative to the frame parts. A kinematic model is formed for such a frame-steered articulated loading machine. The steering sequence of the frame-steered mining vehicle may define steering angles of the centre pivot relative to the driving distance.

According to an embodiment, the mining vehicle is a rock drilling rig, bolting vehicle, charging vehicle, transport vehicle or measuring vehicle.

According to an embodiment, the path search process employs pre-determined rules for the testing of different steering movements. These rules may decrease the number of different steering movements to be tested during the search, whereby the process is quickened. The rules may take into account known information relating to the driving situation. For example, the rules may include information concerning the transfer drive away from the main route, whereby the steering direction is known by the system. Moreover, when experimenting with the steering movements, the algorithm may prioritize such steering movements which have been detected to have high frequency of occurrence before.

According to an embodiment, the path search process employs a decision tree wherein pre-determined steps for the testing of different steering steps are defined beforehand on the basis of known features of the driving situation. In the decision tree, the most probable steering movements are tested first, which fastens the path search. Different decision trees may be formed in advance for different situations, and these decision trees may be stored in a data file which can be retrieved by the search algorithm. The decision tree illustrates the search procedure well, and it is easy to modify the decision tree case-specifically when needed.

According to an embodiment, the path search process experiments on different steering movements in random. This embodiment requires sufficient computing capacity in order to offer a fast path search.

According to an embodiment, the collision avoidance system employs an occupancy grid, wherein an occupancy grid map of the mine is generated. The occupancy grid maps the environment as an array of cells. The cell size may be a few centimetres typically ranging from 1 to 10 cm. The mine map is in 2D. The mine may be divided into two types of cells, namely free cells that are in a free space, such as in a tunnel, and occupied cells that are in rock. The collision avoidance system checks whether the mining vehicle protrudes into a grid cell occupied by rock material or not. Thus, the use of the occupancy grid is a kind of binary problem, whereby it offers a possibility to a fast collision avoidance examination and does not need extensive data processing capacity.

According to an embodiment, the steering sequence is executed without simultaneous navigation. This is possible since the path drive is based on complete steering and driving instructions formed in advance. Thanks to this feature, the automatic drive can be fast, since there is no need for extensive calculations and measurements during the drive. Thus, it may be sufficient for the control of the automatic drive to measure only the distance being driven along the generated path. One additional advantage is that conditions on the drive route have only a minor effect on the automatic drive. For example, spreading dust after loading does not hamper the execution of the created steering sequence, since there is no need to scan the surroundings of the mining vehicle in order to navigate along the drive path.

According to an embodiment, the steering sequence may include one or more changes of driving direction. This feature facilitates the drive path generation when there are very narrow spaces and difficult driving situations.

According to an embodiment, the path search algorithm finds several acceptable collision-free steering sequences, from which one is selected on the basis of pre-determined rules and criteria. One possible criterion for the selection may be simplicity of the steering sequence, whereby steering sequences without changes of driving direction may have higher priority in the selection. Another possible criterion for the selection may be the distance between the mining vehicle and the wall surfaces. The distance information can be calculated in the processor. The greater the distance to the walls is, the safer is the drive, wherefore a steering sequence producing a greater wall distance may be prioritized. One possibility is to minimize the time of the return drive and to select a driving sequence that offers the shortest or fastest return drive.

According to an embodiment, the path search algorithm indicates if no return path can be found without collision to the wall surfaces. In such as case, manual drive is needed for changing the initial position. The operator drives the mining vehicle to a new place and orientation, after which the path search algorithm is restarted.

According to an embodiment, a loading point, an unloading point or any other mining work point is provided with a pre-determined initial area. The operator may drive the mining vehicle to the initial area after the mining work has been completed in the mining work point. The initial area is determined so, that the mining vehicle can be driven away from the mining work point without instant problems. This means that, when being in the initial area, the search algorithm can find a drive path for automatic driving. Exact data on position and orientation of the start point is determined before beginning the search algorithm, of course.

According to an embodiment, the return path is generated to the same mine space where the mining vehicle diverged from its route.

According to an embodiment, the return path is generated to a different mine space as where the mining vehicle diverged from its route.

According to an embodiment, the return drive is executed predominantly by reverse driving the mining vehicle.

According to an embodiment, the goal point in the return path search is a route point of the main route which is located closest to the mining vehicle before the mining vehicle diverged from the main route.

According to an embodiment, the goal point in the return path search is a route point of the main route which is located closest to the mining vehicle.

According to an embodiment, the drive path search method, apparatus and software disclosed in this patent application are used for finding a drive path for a surface mining vehicle operating in an opencast mine or similar mining working site above ground. The path search may be implemented by using the same search processes disclosed above.

### Brief description of the figures

Some embodiments are described in more detail in the accompanying drawings, in which
Figure 1 is a schematic side view showing a mining vehicle,
Figure 2 is a schematic top view illustrating an arrangement for driving an articulated loading vehicle in a mine along a main route,
Figure 3 illustrates a control block diagram of an apparatus planning a drive path of a mining vehicle,
Figure 4 is a schematic view showing a principle of an automated transport system in a block caving mine and the utilization of the drive path search process in such system,
Figure 5 is a schematic top view of a detail W in Figure 4 showing a loading tunnel branching from a main route,
Figure 6 is a schematic view showing a mine, where a mine vehicle is driven automatically between two mining work points and a steering sequence is created for enabling the drive,
Figure 7 is a schematic top view showing a mining vehicle diverged from a main route and possibilities for returning the mining vehicle back to the route,
Figure 8 is a simplified chart showing a drive path search procedure in a general concept,
Figure 9 is a simplified chart showing issues relating to a return path search procedure,
Figure 10 illustrates a decision tree defining pre-determining steps for experimenting on different steering and driving possibilities,
Figure 11 illustrates an occupancy grid of a mine, and
Figures 12 to 14 are schematic simulation views showing the driving of a mining vehicle along a selected driving path according to a created driving sequence.

For the sake of clarity, the figures show some embodiments of the disclosed solution in a simplified manner. In the figures, like reference numerals identify like elements.

### Detailed description of some embodiments

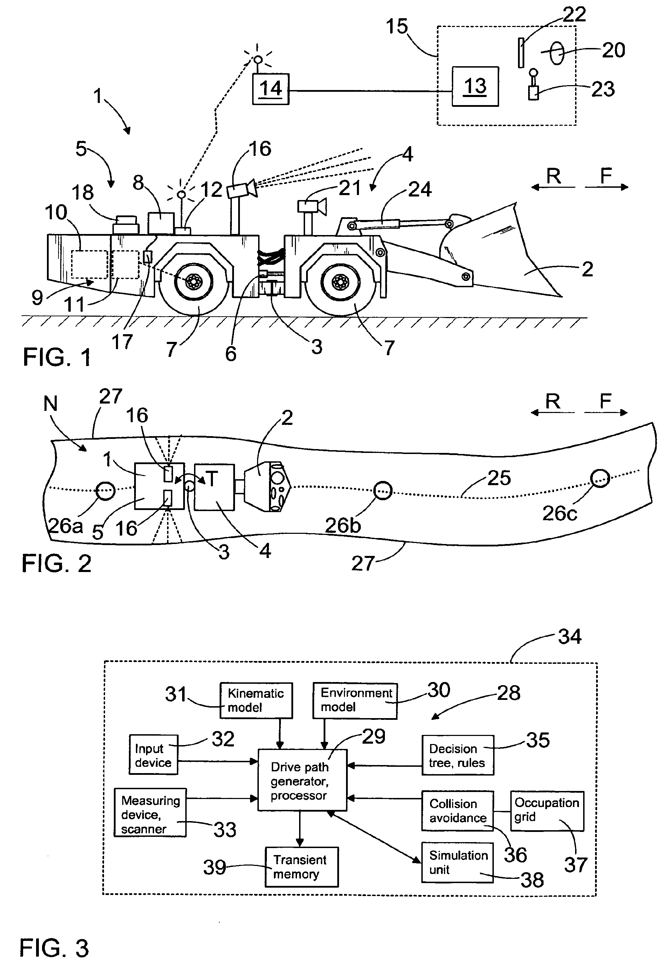

Figure 1 shows a mining vehicle 1, in this case a loading vehicle, which is a special type of wheel loader comprising a bucket 2 at its front end for transporting and loading excavated rock material. The loading vehicle may be frame-steered, whereby it is provided with a centre pivot 3 between a front frame 4 and a rear frame 5. Such an articulated loading vehicle is steered by turning the frame parts relative to each other by means of steering cylinders 6, for example. The frame parts include wheels 7, which are not turned relative to the frame parts. The mining vehicle 1 is further provided with a control system which includes one or more control units 8 configured to control actuators in the mining vehicle for controlling and driving the vehicle. The control unit 8 is arranged to control for example the steering cylinders 6 and a traction system 9 including a drive motor 10 and transmission means 11. The mining vehicle can be driven in forward direction F and in reverse direction R. The control unit 8 may be a computer equipped with appropriate software, or an entity consisting of a plurality of computers.

The mining vehicle may be provided with a data transfer unit 12 which enables the control unit 8 to establish a data transfer connection with one or more control units 13 external to the mining vehicle. The data transfer connection may be based on a wireless connection provided by one or more base stations 14. The external control 13 unit may reside in a control room 15, which may be arranged outside the mine.

Further, the control system of the mining vehicle 1 comprises a positioning system or positioning unit. The positioning system may comprise one or more scanners 16 for scanning the space surrounding the mining vehicle and the geometry of that space. The scanners 16 may be laser scanners, ultrasound scanners or any other type of scanner suitable for determining a profile and surface contours of the surrounding mine walls. The scanning results are compared to an environmental model of the mine that is created in advance. The positioning system, which is based on the environmental model, can be used to determine the current position and orientation of the mining vehicle. Further, this positioning principle can be used for determining the distance travelled by the mining vehicle 1. According to an alternative, the driving distance is measured by an arrangement where one or more sensors 17 are used for measuring the rotation of a wheel 7 or transmission means. On the basis of the measurement data, the positioning system determines the rotational movement of the wheel and then calculates the magnitude of distance travelled by the machine. Further, the mining vehicle 1 may comprise a gyroscope or corresponding measuring device 18 for determining the orientation of the mining vehicle.

The mining vehicle 1 may be provided with a video image system allowing visual information to be sent from the unmanned mining vehicle 1 to the control room 15 for an operator 20. Some mining tasks, such as loading of the bucket are quite difficult to automate and manual control via teleoperation is still widely used. The mining vehicle 1 may comprise one or more video cameras 21 and video data is sent via the data transfer unit 12 to the control room 15. In the control room 15, there may be one or more displays 22 for showing video image of the operation, and control means 23, such as joy-sticks for controlling the traction system 9 and actuators, such as bucket cylinders 24. In addition to cameras, the mining vehicle may comprise one or more measuring devices, sensors or other detection means for helping the remote control during the manual operation.

In Figure 2 an articulated loading vehicle 1 is driving in a mine along a pre-determined and stored main route 25 under automatic drive N. The route 25 includes route points 26a - 26c at determined intervals. The route points 26 include position data, such as coordinates in a coordinate system of the mine. Other route-point-specific data can also be included. The loading vehicle 1 may autonomously follow the route 25 by following the position information of the route points 26 and simultaneously determining the current position by comparing the measuring data of scanners 16 and the pre-stored environment model. The front part 4 and rear part 5 are turned around the centre pivot 3, whereby different steering angles T occur.

The environment model generally refers to a model modelling the mine and may have been defined by driving a scouting or measuring vehicle in the mine and by scanning wall profiles, for example. The environment model comprises at least data concerning the location of the walls 27 of a tunnel. The environment model may determine x and y coordinates of the points describing the location of the walls 27 in a particular standard system of coordinates. When generating an environment model by scanning, the x and y coordinates determine the location of a wall 27 at a height at which the scanner 16 resides in the mining machine 1. In the case of one plane, a two-dimensional tunnel map is provided by outputting the points of the environment model on a xy plane. The environment model may also comprise other information if necessary. Should a three-dimensional scanning be used, the environment model could further comprise z coordinate information, in which case a 3D profile of the tunnels would be available.

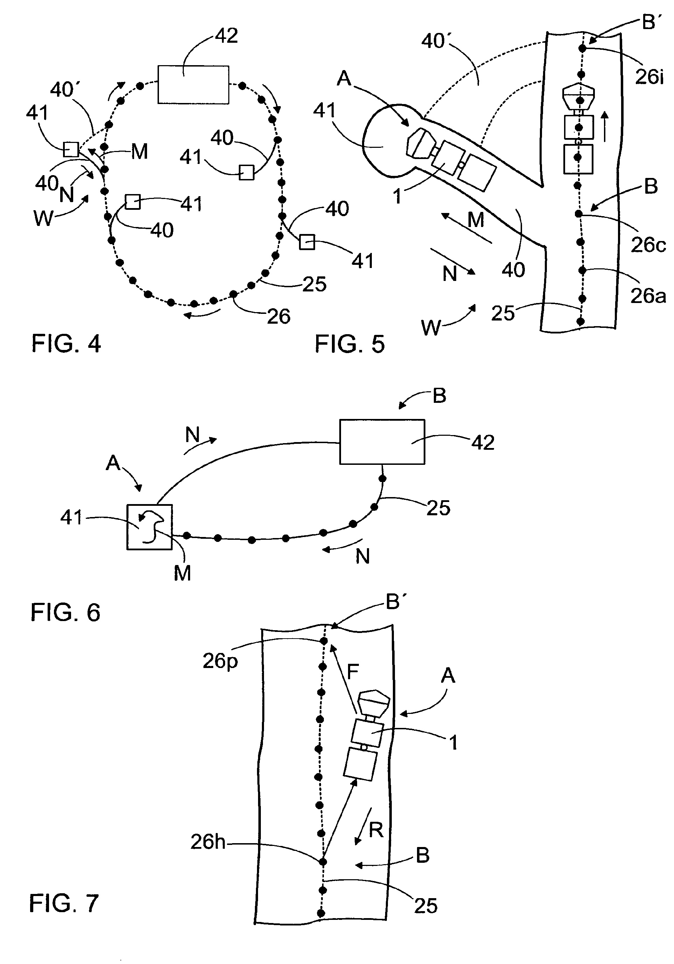

Figure 3 illustrates an apparatus 28 according to an embodiment for determining drive paths for mining vehicles. The apparatus 28 comprises at least a drive path generator 29 for determining drive paths by utilizing an environment model 30 and a kinematic model 31. The drive path generator 29 executes at least one drive path search algorithm which searches for feasible steering sequences satisfying a collision-free drive of the mining vehicle. The generator 29 may be implemented e.g. by a general-purpose processor of a data processing device, on which one or more computer programs executing drive path search determination procedures are run. The computer program comprises a code for executing at least some of the features related to creating steering sequences already described and illustrated in the following in connection with Figures 4 to 9. The computer program may be recorded on non-transitory computer-readable media including program instructions for implementing various operations executed by a computer. The apparatus 28 may retrieve the kinematic model of the mining vehicle, stored in a data file or memory, or alternatively the kinematic model or data may be included in a vehicle-specific search algorithm. By means of an input device, it is possible to determine for example a goal point for the path search, or alternatively the search algorithm selects the goal point according to defined rules. Data concerning position and orientation of the mining vehicle can be transmitted from one or more measuring devices 33 to the drive path generator 29. The drive path search process 34 may further include pre-defined rules for the search or one or more decision tree 35. A collision avoidance process 36 is also employed and it may rely on an occupancy grid 37. The path generator 29 experiments on a plurality of steering movements and finds one or more steering sequences implementing a collision-free drive path. The created driving sequences can be tested, and visualized for the operator, in a simulation unit 38 before selecting one single sequence to be executed. The selected driving sequence can be stored in a memory unit 39, which can be a transient memory. The stored steering sequence can be read by the control unit 8 of the mining vehicle when driving automatically along the created drive path. Let it be mentioned that the drive path generator 29 and the control unit 8 can be separate devices or they can be integrated.

Figure 4 shows a principle of an automated transport system in a block caving mine and the utilization of the drive path search process in such a system. One or more automatic loading vehicles 1 are driven along a main route 25 comprising route points 26 provided with position data. There are several loading tunnels 40 branching from the main route 25 and comprising loading sites 41. The loading vehicle 1 is driven under manual control M from the main route 25 to the loading tunnel 40 to load a bucket. When the loading is complete, the position and orientation of the loading vehicle is determined and input as initial data to a drive path generator. A steering sequence is created before starting a return drive. The loading vehicle 1 can be reverse driven automatically N according to the generated steering sequence back to the main route 25. When the loading vehicle 1 has returned to the main route 25, it can continue in automatic drive to an unloading site 42 to empty the bucket. Thereafter the loading vehicle 1 drives automatically close to the same or another loading tunnel 40. Again the operator takes control of the loading vehicle 1 and drives it under remote control to the loading site 41 and fills the bucket. After this a new unique steering sequence is generated for driving the loading vehicle automatically back to the main route 25.

Figure 5 shows in detail the driving of the loading vehicle 1 manually M from the main route 25 via the loading tunnel 40 to the loading site 41 and its return back to the main route 25 by reverse driving it according to the created steering sequence. The actual initial position and orientation of the loading vehicle 1 is defined as a start point A for a drive path. The operator may select one route point 26c of the main route 25 to represent a goal point B for the drive path. Alternatively, the path search algorithm may define the goal point B on the main route 25.

In Figures 4 and 5 broken lines show an alternative branching tunnel 40*'* along which the loading vehicle 1 may return drive back to the main route 25. In this case, one route point 26i is determined as a goal point B'. In this embodiment, there is no need to drive the mining vehicle in reverse direction when returning back to the main route 25.

Figure 6 discloses a mine, wherein a mine vehicle, such as a loading vehicle, can be driven automatically between two mining work points, such as a loading site 41 and an unloading site 42. The loading vehicle can be driven under teleoperation in the loading site 41 and when a bucket filling procedure is completed, an actual initial position and orientation of the vehicle is determined. Thus, a start point A for the drive path search is defined. Pre-determined position data of the unloading site 42 can be used as a goal point B for the search process. A steering sequence is created in a processor for enabling the automatic driving from point A to point B. The mining vehicle can be driven from the unloading site 42 to the loading site 41 along a pre-determined route 25. It is also possible to generate a single-use drive path for driving the loading vehicle from the unloading site 42 to the loading site 41, whereby there is no need for the main route 25.

In Figure 7 a mining vehicle 1 has diverged from a main route 25 and the automatic drive is ended. In order to resume the automatic drive, the mining vehicle 1 needs to be returned to the main route 25. A return drive path is generated for returning the mining vehicle 1 to the main route 25. An actual position and orientation of the vehicle is determined and this data is employed as a start point A for the return drive path search. A route point 26h recognized before the diverged drive can be selected as a goal point B. Alternatively, any other route point of the main route 25 can be selected as the goal point B. When a route point 26p is selected, there is no need to reverse drive R the mining vehicle, but instead the mining vehicle 1 can be returned by driving it in forward direction F whereby the vehicle moves towards the original transport direction. This saves time and is effective.

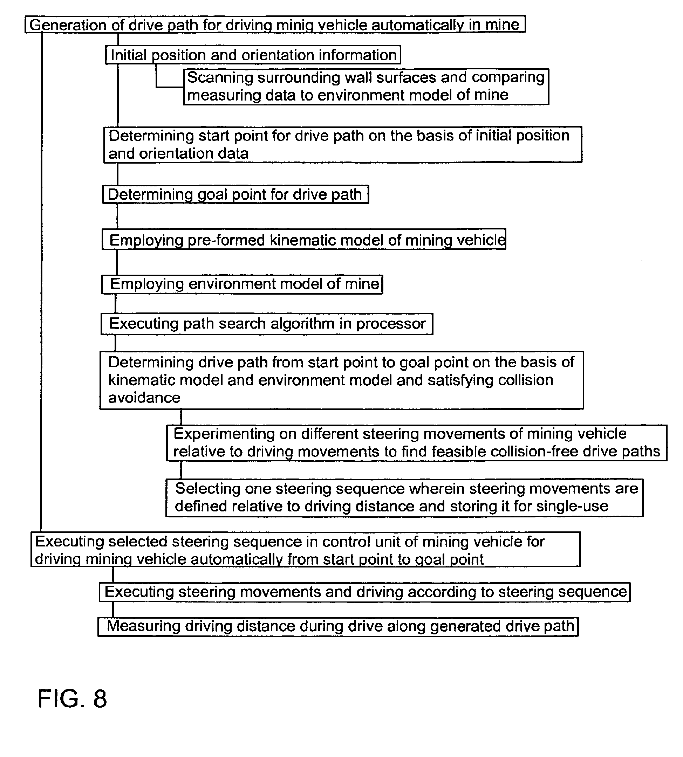

Figure 8 is a simplified chart showing a drive path search procedure in general. The steps and features presented in this Figure are discussed above and especially in section Brief description of the invention.

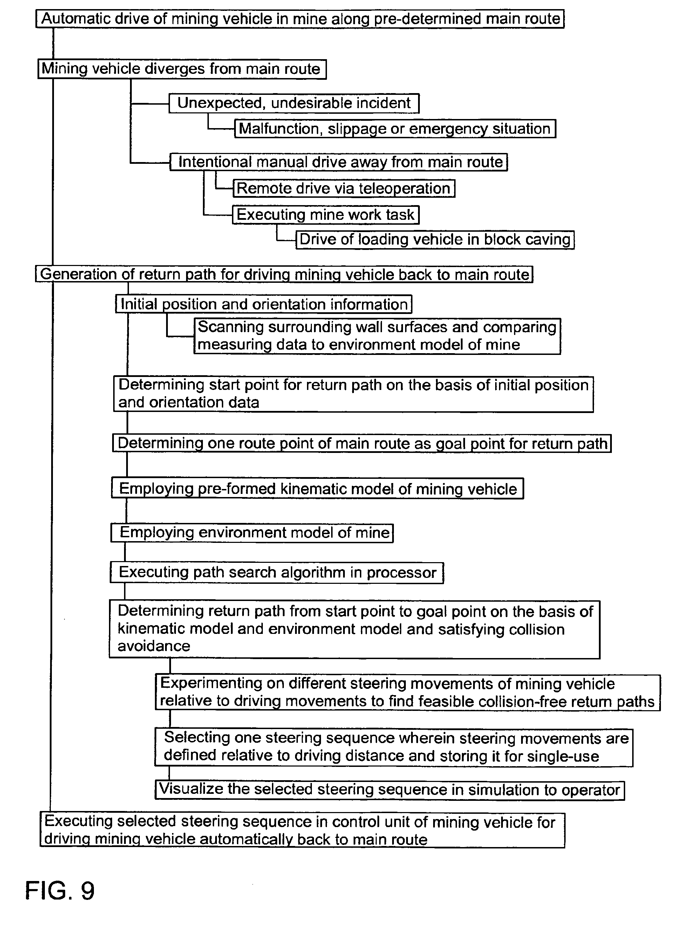

Figure 9 is also a simplified chart that shows issues relating to a return path search procedure. The steps and features presented in this Figure are discussed above and especially in section Brief description of the invention and in connection with Figures 4, 5 and 7.

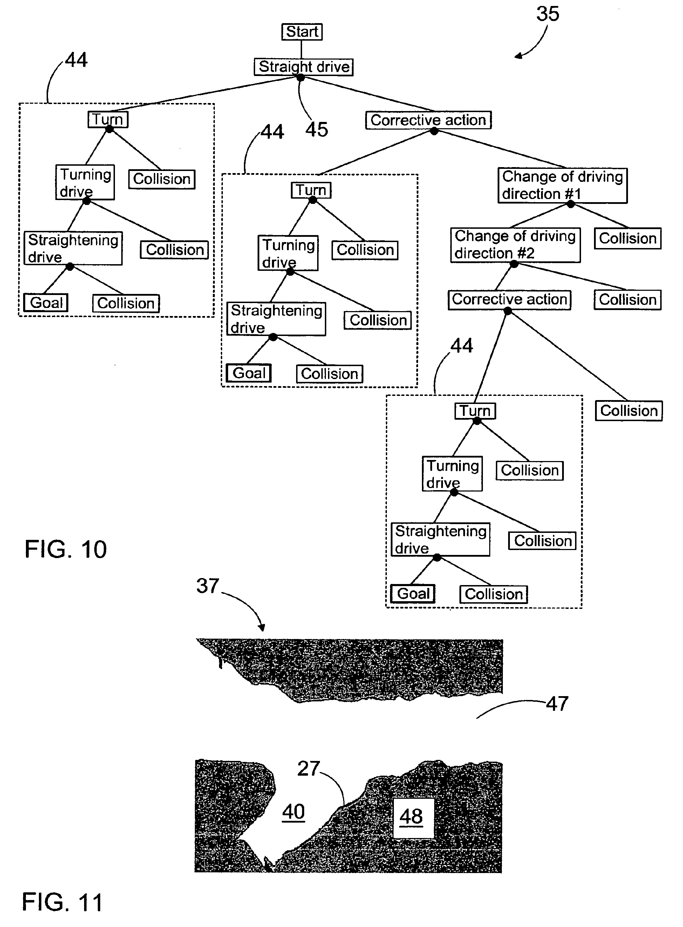

Figure 10 discloses an example of a decision tree 35 in which steps are pre-determined for experimenting on different steering and driving possibilities. Thanks to the decision tree 35, the most probable steering movements are tested first, which fastens the path search. The decision tree 35 may include a basic steering block 44 which includes steering possibilities that occur in most driving situations. The decision tree 35 comprises several branches and decisions are made in knot points 45, which are shown as black points. The decision tree 35 is followed from top to bottom and from left to right. At first experiments are made according to steering actions in the left-most basic steering block 44 and if no solution is found, then there is a need for corrective actions. In the right-most branch, driving direction is changed, for example.

Figure 11 illustrates a two-dimensional occupancy grid 37 of a mine. In the drive path search process, the occupancy grid may be used for collision avoidance monitoring. It has been noted that an occupancy grid can quicken the collision examination significantly and it also does not require extensive computing capacity. The occupancy grid 37 can be formed for a limited area of the mine, whereby occupancy grids can be formed for each loading tunnel 40 in the block caving system disclosed in Figures 4 and 5. By limiting the examined mining are it is possible to further quicken the collision analysis. The occupancy grid 37 can be formed on the basis of an environment model of the mine. The mine or the selected limited mine area can be defined in cells, the size of which may be a few centimetres. Cells of two types are used for defining the mine, namely free cells and occupied cells. Free cells are located in a free space and occupied cells are located inside rock. In Figure 11, white colour areas show the free cells 47 and grey colour areas show the occupied cells 48. Contour lines of the walls 27 are also defined as occupied areas. The collision avoidance system checks whether the mining vehicle enters into a cell occupied by rock material or not. Several collision control points can be defined according to the outer dimensions of the mining vehicle and the collision avoidance system may check that these points stay outside the occupied cells when the mining vehicle drives along a drive path. It is also possible to define one or more security zones around the mining vehicle, whereby the collision avoidance system may check that the safe zone remains in the acceptable area 47 defined by the free cells.

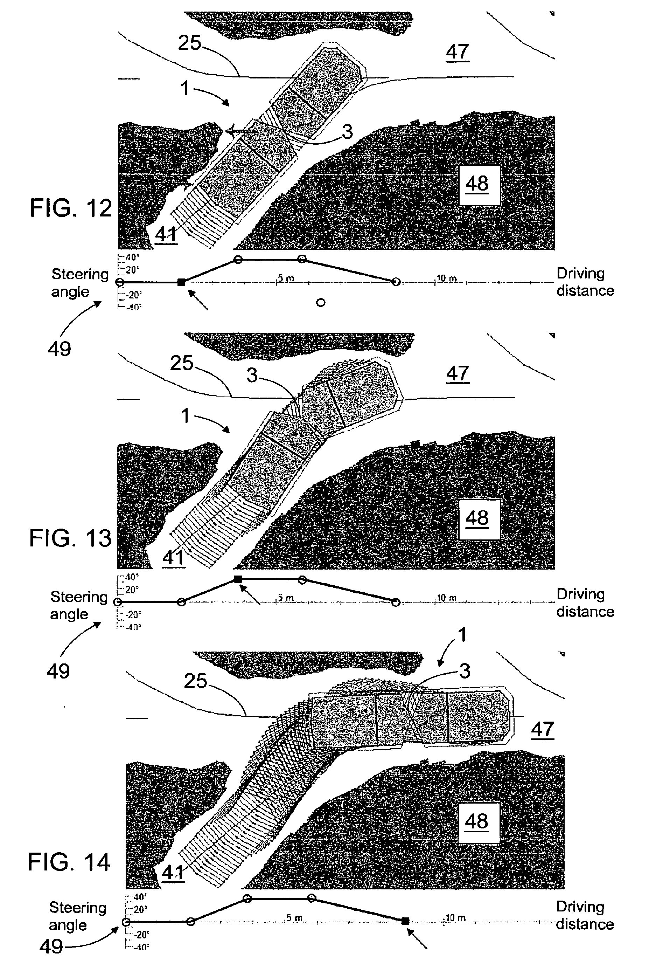

Figures 12 to 14 are schematic simulation views showing how a mining vehicle 1 is driven along a selected driving path according to a created driving sequence. The driving sequence is illustrated as graph 49. The steering sequence defines steering movements as a function of the driving distance. When the mining vehicle 1 is an articulated frame-steered vehicle, the steering movements can also be defined as steering angles of the centre pivot 3. In graphs 49, the current control stages are shown by black squares and arrows. Movements of the mining vehicle can be shown as ghost lines in the simulation views.

The computer program disclosed in this patent application may be recorded in non-transitory computer-readable media including program instructions to implement various operations embodied by a computer. The media may also include, alone or in combination with the program instructions, data files, data structures, and the like. Examples of computer-readable media or computer-readable storage devices include magnetic media, such as hard disks, and optical media such as CR-ROM disks and DVDs, flash memory means, and hardware devices that are configured to store software. The computer-readable media may be a plurality of computer-readable storage devices in a distributed network, so that the program instructions are stored in a plurality of computer-readable storage devices and executed in a distributed fashion. The program instructions may be executed by one or more processors or processing devices.

## Claims

1. An apparatus comprising at least one data processing device (29) for finding a drive path for an automatic drive of a mining vehicle (1) in a mine, the mining vehicle being arranged to drive in the mine automatically along a pre-determined main route (25) including a plurality of route points,
the apparatus being configured to:
define a start point and goal point for a drive path to be found;
and generate the drive path from the start point to the goal point by employing a kinematic model (31) of the mining vehicle and an environment model (30) of a mine comprising wall location data;
**characterized in that** the apparatus is further configured to:
receive data on actual initial position and orientation of the mining vehicle in the mine and input this data as the start point (A) of the drive path (40);
experiment, by a path search process implemented by a path generator, on several different steering movements of the mining vehicle relative to the driving movements to find at least one steering sequence satisfying collision-free drive path from the start point to the goal point (B);
select one created steering sequence for executing the found drive path completely, and
return, on the basis of the selected steering sequence, the mining vehicle back to the main route (25) in order to continue the automatic main drive.

2. An apparatus as claimed in claim 1, **characterized in that** the apparatus is configured to:
store the selected steering sequence by defining steering movements as a function of the driving distance, and wherein the selected steering sequence is stored in a transient computer-readable memory (39) and to treat the selected steering sequence as a single-use data element controlling one single drive along the drive path.

3. An apparatus as claimed in claim 1 or 2, **characterized in that**
the apparatus is configured to prioritize in the selection of the steering sequence at least one of the following features: distance between the mining vehicle and the mine walls when driving along the generated drive path; avoidance of drive direction changes; length of the drive path.

4. An apparatus as claimed in any one of preceding claims 1 to 3, **characterized in that**
the apparatus is configured to visualize at least one of the found driving sequences by simulating the driving of the mining vehicle according to the steering sequence before executing of the automatic drive.

5. An apparatus as claimed in any one of preceding claims 1 to 4, **characterized in that**
the apparatus is configured to receive measuring data from measuring means in the mining vehicle, the measuring data comprising data of the mine walls surrounding the mining vehicle; and
the apparatus is configured to determine at least the initial position of the mining vehicle by comparing measuring data of the mine walls and the environment model (30).

6. An apparatus as claimed in any one of preceding claims 1 to 5, **characterized in that**
the apparatus is configured to implement in the search for the drive path a collision avoidance based on an occupancy grid system, wherein an occupancy grid map of the mine is generated on the basis of the environment model, and wherein the collision avoidance checks whether the mining vehicle enters on the fond drive path into a grid cell occupied by rock material or not.

7. An apparatus as claimed in any one of the preceding claims 1 to **6, characterized in that**
the apparatus is configured to retrieve a decision tree (35) formed beforehand and to employ pre-determined rules for the testing of different steering steps defined therein on the basis of known features of the driving situation.

8. An apparatus as claimed in any one of preceding claims 1 to 7, **characterized in that**
the apparatus is configured to select one route point (26c) of the main route (25) as a goal point (B) in the search for the return path.

9. An apparatus as claimed in any one of preceding claims 1 to 7, **characterized in that** the mining vehicle (1) is a frame-steered loading vehicle comprising a centre pivot between frame parts of the loading vehicle, and the steering sequence defines steering angles of the centre pivot relative to the driving distance.

10. An apparatus as claimed in any one of preceding claims 1 to 7, **characterized in that** the apparatus is configured to:
update the goal point (B) during the path search process.

11. A method of searching a drive path for an automatic drive of a mining vehicle (1) in a mine, the mining vehicle being arranged to drive in the mine automatically along a pre-determined main route (25) including a plurality of route points, the method comprising:
implementing the search for the drive path in at least one data processing device;
defining a start point and goal point for the search process of the drive path;
and generating a drive path from the start point to the goal point by employing a kinematic model (31) of the mining vehicle and an environment model (30) of a mine comprising wall location data;
**characterized by**
receiving actual initial position and orientation data of the mining vehicle in the mine and feeding this data as the start point (A) for the drive path;
experimenting by a path search process implemented by a path generator, on several different steering movements of the mining vehicle relative to the driving movements to find at least one steering sequence satisfying a collision-free drive path from the start point to the goal point (B);
selecting one created steering sequence for executing the found drive path completely, and
returning, on the basis of the selected steering sequence, the mining vehicle back to the main route (25) in order to continue the automatic main drive.

12. A method as claimed in claim 11, **characterized by**
storing the selected steering sequence by defining steering movements as a function of the driving distance, whereby the selected steering sequence is stored in a transient computer-readable memory (39) and the selected steering sequence is applied as a single-use data element controlling one single drive along the drive path.

13. A method as claimed in claim **11,characterized by**
applying the path search process to find a single-use return drive path for a mining vehicle driven intentionally under manual control away from the pre-determined automatic main route; and
selecting one route point of the main route to serve as the goal point for the drive path;
and retrieving position data of the selected route point of the main route.

14. A method as claimed in claim 11, **characterized by**
applying the path search process to find a single-use return drive path for a mining vehicle that has diverged unexpectedly away from the pre-determined automatic main route; and
selecting one route point of the main route to serve as the goal point for the drive path;
and retrieving position data of the selected route point.

15. A computer program,
**characterized in that**
the computer program comprises program code means configured to execute the method disclosed in any one of claims 11 to 14 when being run on a computer.

## Patentansprüche

1. Ein Gerät umfassend mindestens eine Datenverarbeitungsvorrichtung (29) zur Auffindung einer Fahrstrecke zum automatischen Fahren eines Minenfahrzeugs (1) in eine Mine, wobei das Minenfahrzeug angeordnet ist, um in der Mine automatisch entlang einer vorgegebenen Hauptroute (25) mit einer Mehrzahl an Routenpunkten zu fahren,
wobei das Gerät konfiguriert ist, um:
- einen Startpunkt und einen Zielpunkt für eine aufzufindenden Fahrstrecke zu definieren,
- und die Fahrstrecke vom Startpunkt zum Zielpunkt durch Verwendung eines kinematischen Modells (31) des Minenfahrzeugs sowie eines Umweltmodells (30) der Mine, das die Ortsdaten der Wände umfasst, zu generieren;
**dadurch gekennzeichnet, dass** das Gerät darüber hinaus konfiguriert ist, um:
- Daten über eine aktuelle Startposition und die Orientierung des Minenfahrzeugs in der Mine zu empfangen und diese Daten als Startpunkt (A) der Fahrstrecke (40) einzugeben;
- über ein von einem Wege-Generator implementiertes WegeSuch-Verfahren durch mehrere verschiedene Steuerungsbewegungen des Minenfahrzeugs in Bezug auf die Fahrbewegungen durch Experimentieren mindestens eine Steuerungssequenz zu finden, die eine zufriedenstellende, kollisionsfreie Fahrstrecke vom Startpunkt zum Zielpunkt (B) ergibt;
- mindestens eine geschaffene Steuerungssequenz auszuwählen, um die gefundene Fahrstrecke vollständig auszuführen; und
- das Minenfahrzeug auf Grundlage von der ausgewählten Steuerungssequenz zur Hauptroute (25) zurückzufahren, um die automatische Hauptfahrt weiterzuführen.

2. Ein Gerät gemäß Anspruch 1, **dadurch gekennzeichnet, dass** das Gerät konfiguriert ist, um die ausgewählte Steuerungssequenz durch die Definition der Steuerungsbewegungen als Funktion der Fahrstrecke abzuspeichern, wo die ausgewählte Steuerungssequenz in einem vorübergehenden computer-lesbaren Speicher (39) abgespeichert ist und die ausgewählte Steuerungssequenz als einmaliges Datenelement zur Steuerung einer einmaligen Strecke entlang der Fahrstrecke zu verarbeiten.

3. Ein Gerät gemäß Anspruch 1 oder 2, **dadurch gekennzeichnet, dass** das Gerät konfiguriert ist, um die Auswahl der Steuerungssequenz gemäß mindestens einer der folgenden Funktionen zu priorisieren: Entfernung zwischen dem Minenfahrzeug und den Minenwänden während dem Fahren entlang der generierten Fahrstrecke; Vermeidung von Richtungsänderungen; Länge der Fahrstrecke.

4. Ein Gerät gemäß einem der Ansprüche 1 bis 3, **dadurch gekennzeichnet, dass** das Gerät konfiguriert ist, um mindestens eine der gefundenen Fahrsequenzen durch Simulation der Fahrt des Minenfahrzeugs gemäß der Steuerungssequenz vor Ausführung der automatischen Fahrt zu visualisieren.

5. Ein Gerät gemäß einem der Ansprüche 1 bis 4, **dadurch gekennzeichnet, dass** das Gerät konfiguriert ist, um Messdaten von Messmitteln im Minenfahrzeug zu empfangen, wobei die Messdaten Daten über die Minenwände im Umfeld des Minenfahrzeugs umfassen; und dass das Gerät konfiguriert ist, um mindestens die Startposition des Minenfahrzeugs über den Vergleich der Messdaten über die Minenwände mit dem Umfeldmodell (30) zu bestimmen.

6. Ein Gerät gemäß einem der Ansprüche 1 bis 5, **dadurch gekennzeichnet, dass** das Gerät konfiguriert ist, um bei der Suche nach einer Fahrstrecke eine Kollisionsverhinderung auf der Grundlage von einem Besetzungsrastersystems zu implementieren, wo ein Besetzungsrastersystem der Mine auf der Grundlage von dem Umfeldmodell generiert wird und wo die Kollisionsvermeidung prüft, ob das Minenfahrzeug auf der bevorzugten Fahrstrecke in eine Rasterzelle fährt, die mit Felsmaterial besetzt ist oder nicht.

7. Ein Gerät gemäß einem beliebigen der Ansprüche 1 bis 6, **dadurch gekennzeichnet, dass** das Gerät konfiguriert ist, um einen zuvor gebildeten Entscheidungsbaum (35) wiederzufinden und vorbestimmte Regeln zum Testen verschiedener, dort auf der Grundlage von bekannten Funktionen der Fahrsituation definierte Steuerungsschritte zu verwenden.

8. Ein Gerät gemäß einem der Ansprüche 1 bis 7, **dadurch gekennzeichnet, dass** das Gerät konfiguriert ist, um bei der Suche des Rückwegs einen Routenpunkt (26c) der Hauptroute (25) als einen Zielpunkt (B) auszuwählen.

9. Ein Gerät gemäß einem der Ansprüche 1 bis 7, **dadurch gekennzeichnet, dass** das Minenfahrzeug (1) ein mittels Knicklenkung gesteuertes Ladefahrzeug ist, welches einen Drehpunkt zwischen Rahmenteilen des Ladefahrzeugs umfasst und wo die Steuerungssequenz Steuerungswinkel des Drehpunkts in Bezug auf die Fahrstrecke definiert.

10. Ein Gerät gemäß einem der Ansprüche 1 bis 7, **dadurch gekennzeichnet, dass** das Gerät konfiguriert ist, um während des Wegesuch-Verfahrens den Zielpunkt (B) zu aktualisieren.

11. Ein Verfahren zur Suche einer Fahrstrecke zum automatischen Fahren eines Minenfahrzeugs (1) in einer Mine, wobei das Minenfahrzeug angeordnet ist, um in der Mine automatisch entlang einer vorgegebenen Hauptroute (25) mit einer Mehrzahl an Routenpunkten zu fahren, und das Verfahren folgendes umfasst:
- Implementierung der Suche nach der Fahrstrecke in mindestens einer Datenverarbeitungsvorrichtung;
- Definition eines Startpunkts und eines Zielpunkts für das Suchverfahren der Fahrstrecke,
- Erstellung einer Fahrstrecke vom Startpunkt zum Zielpunkt durch Verwendung eines kinematischen Modells (31) des Minenfahrzeugs und eines Umweltmodells (30) der Mine, das die Ortsdaten der Wände umfasst;
**Dadurch gekennzeichnet, dass**
- die Daten über die aktuelle Startposition und die Orientierung des Minenfahrzeugs in der Mine empfangen und diese Daten als Startpunkt (A) der Fahrstrecke eingegeben werden;
- es über ein von einem Wege-Generator implementiertes WegeSuch-Verfahren durch mehrere verschiedene Steuerungsbewegungen des Minenfahrzeugs in Bezug auf die Fahrbewegungen experimentiert wird, mindestens eine Steuerungssequenz zu finden, die eine zufriedenstellende, kollisionsfreie Fahrstrecke vom Startpunkt zum Zielpunkt (B) ergibt;
- mindestens eine geschaffene Steuerungssequenz ausgewählt wird, um die gefundene Fahrstrecke vollständig auszuführen, und
- das Minenfahrzeug auf Grundlage von der ausgewählten Steuerungssequenz zur Hauptroute (25) zurückgefahren wird, um die automatische Hauptfahrt weiterzuführen.

12. Ein Verfahren gemäß Anspruch 11, **dadurch gekennzeichnet, dass** die ausgewählte Steuerungssequenz durch die Definition der Steuerungsbewegungen als Funktion der Fahrstrecke abgespeichert wird, wo die ausgewählte Steuerungssequenz in einem vorübergehenden computer-lesbaren Speicher (39) abgespeichert ist und die ausgewählte Steuerungssequenz als einmaliges Datenelement zur Steuerung einer einmaligen Strecke entlang der Fahrstrecke angewendet wird.

13. Ein Verfahren gemäß Anspruch 11, **dadurch gekennzeichnet, dass** das Wegesuch-Verfahren angewendet wird, um einen einmaligen Rückweg für ein Minenfahrzeug zu finden, das absichtlich unter manueller Kontrolle von der vorgegebenen Hauptroute abweichend gefahren wird; und dass ein Routenpunkt der Hauptroute ausgewählt wird, um als Zielpunkt für die Fahrstrecke zu dienen; und dass die Positionsdaten des ausgewählten Routenpunkts der Hauptroute wiedergefunden werden.

14. Ein Verfahren gemäß Anspruch 11, **dadurch gekennzeichnet, dass** das Wegesuch-Verfahren angewendet wird, um einen einmaligen Rückweg für ein Minenfahrzeug zu finden, das unbeabsichtigt von der vorgegebenen Hauptroute abgekommen ist; und dass ein Routenpunkt der Hauptroute ausgewählt wird, um als Zielpunkt für die Fahrstrecke zu dienen; und dass die Positionsdaten des ausgewählten Routenpunkts wiedergefunden werden.

15. Ein Computer-Programm, **dadurch gekennzeichnet, dass** das Computer-Programm Codemittel umfasst, die konfiguriert sind, um das in den Ansprüchen 11 bis 14 offengelegte Verfahren durchzuführen, wenn es auf einem Computer ausgeführt wird.

## Revendications

1. Appareil comprenant au moins un dispositif de traitement de données (29) pour trouver un chemin de conduite pour une conduite automatique d'un véhicule minier (1) dans une mine, le véhicule minier étant agencé pour se conduire automatiquement dans la mine le long d'un itinéraire principal prédéterminé (25) incluant une pluralité de points d'itinéraire,
l'appareil étant configuré pour :
définir un point de départ et un point de destination pour un chemin de conduite à trouver ;
et produire le chemin de conduite allant du point de départ au point de destination en utilisant un modèle cinématique (31) du véhicule minier et un modèle d'environnement (30) d'une mine comprenant des données de localisation de paroi ;
**caractérisé en ce que** l'appareil est en outre configuré pour :
recevoir des données concernant une position et une orientation initiales réelles du véhicule minier dans la mine et entrer ces données en tant que point de départ (A) du chemin de conduite (40) ;
expérimenter, par un processus de recherche de chemin mis en oeuvre par un générateur de chemin, sur plusieurs mouvements de direction différents du véhicule minier par rapport aux mouvements de conduite pour trouver au moins une séquence de direction satisfaisant à un chemin de conduite exempt de collision allant du point de départ au point de destination (B) ;
sélectionner une séquence de direction particulière créée pour exécuter le chemin de conduite trouvé entièrement, et
renvoyer, sur la base de la séquence de direction sélectionnée, le véhicule minier en retour sur l'itinéraire principal (25) afin de continuer la conduite principale automatique.

2. Appareil selon la revendication 1, **caractérisé en ce que** l'appareil est configuré pour :
stocker la séquence de direction sélectionnée en définissant des mouvements de direction comme une fonction de la distance de conduite, et dans lequel la séquence de direction sélectionnée est stockée dans une mémoire transitoire lisible par ordinateur (39) et pour traiter la séquence de direction sélectionnée comme un élément de données à utilisation unique commandant une conduite unique particulière le long du chemin de conduite.

3. Appareil selon la revendication 1 ou 2, **caractérisé en ce que**
l'appareil est configuré pour donner la priorité dans la sélection de la séquence de direction à au moins une des particularités suivantes : distance entre le véhicule minier et les parois de la mine en conduisant le long du chemin de conduite produit ; évitement de changements de sens de conduite ; longueur du chemin de conduite.

4. Appareil selon l'une quelconque des revendications précédentes 1 à 3, **caractérisé en ce que**
l'appareil est configuré pour visualiser au moins une des séquences de conduite trouvées en simulant la conduite du véhicule minier selon la séquence de direction avant d'exécuter la conduite automatique.

5. Appareil selon l'une quelconque des revendications précédentes 1 à 4, **caractérisé en ce que**
l'appareil est configuré pour recevoir des données de mesure en provenance de moyens de mesure dans le véhicule minier, les données de mesure comprenant des données des parois de mine entourant le véhicule minier ; et
l'appareil est configuré pour déterminer au moins la position initiale du véhicule minier en comparant des données de mesure des parois de mine et le modèle d'environnement (30).

6. Appareil selon l'une quelconque des revendications précédentes 1 à 5, **caractérisé en ce que**
l'appareil est configuré pour mettre en oeuvre dans la recherche du chemin de conduite un évitement de collision basé sur un système de grille d'occupation, dans lequel une carte de grille d'occupation de la mine est produite sur la base du modèle d'environnement, et dans lequel l'évitement de collision vérifie si le véhicule minier entre dans le chemin de conduite trouvé dans une cellule de grille occupée par une matière rocheuse ou non.

7. Appareil selon l'une quelconque des revendications précédentes 1 à 6, **caractérisé en ce que**
l'appareil est configuré pour récupérer un arbre de décision (35) formé à l'avance et pour utiliser des règles prédéterminées pour le test de différentes étapes de direction définies en son sein sur la base de particularités connues de la situation de conduite.

8. Appareil selon l'une quelconque des revendications précédentes 1 à 7, **caractérisé en ce que**
l'appareil est configuré pour sélectionner un point d'itinéraire particulier (26c) de l'itinéraire principal (25) comme point de destination (B) dans la recherche du chemin de retour.

9. Appareil selon l'une quelconque des revendications précédentes 1 à 7, **caractérisé en ce que** le véhicule minier (1) est un véhicule de chargement à châssis dirigé comprenant un pivot central entre des parties de châssis du véhicule de chargement et la séquence de direction définit des angles de direction du pivot central par rapport à la distance de conduite.

10. Appareil selon l'une quelconque des revendications précédentes 1 à 7, **caractérisé en ce que** l'appareil est configuré pour :
mettre à jour le point de destination (B) pendant le processus de recherche de chemin.

11. Procédé de recherche d'un chemin de conduite pour une conduite automatique d'un véhicule minier (1) dans une mine, le véhicule minier étant agencé pour conduire dans la mine automatiquement le long d'un itinéraire principal prédéterminé (25) incluant une pluralité de points d'itinéraire, le procédé comprenant :
la mise en oeuvre de la recherche du chemin de conduite dans au moins un dispositif de traitement de données ;
la définition d'un point de départ et d'un point de destination pour le processus de recherche du chemin de conduite ;
et la production d'un chemin de conduite depuis le point de départ jusqu'au point de destination en utilisant un modèle cinématique (31) du véhicule minier et un modèle d'environnement (30) d'une mine comprenant des données de localisation de paroi ;
**caractérisé par**
la réception de données de position et d'orientation initiales réelles du véhicule minier dans la mine et l'amenée de ces données comme point de départ (A) pour le chemin de conduite ;
l'expérimentation par un processus de recherche de chemin mis en oeuvre par un générateur de chemin, sur plusieurs mouvements de direction différents du véhicule minier par rapport aux mouvements de conduite pour trouver au moins une séquence de direction particulière satisfaisant un chemin de conduite exempt de collision allant du point de départ au point de destination (B) ;
la sélection d'une séquence de direction particulière créée pour exécuter le chemin de conduite trouvé complètement, et
le retour, sur la base de la séquence de direction sélectionnée, du véhicule minier en retour vers l'itinéraire principal (25) afin de continuer la conduite principale automatique.

12. Procédé selon la revendication 11, **caractérisé par**
le stockage de la séquence de direction sélectionnée en définissant des mouvements de direction comme une fonction de la distance de conduite, de sorte que la séquence de direction sélectionnée est stockée dans une mémoire transitoire lisible par ordinateur (39) et la séquence de direction sélectionnée est appliquée comme un élément de données à utilisation unique commandant une conduite unique le long du chemin de conduite.

13. Procédé selon la revendication 11, **caractérisé par**
l'application du processus de recherche de chemin pour trouver un chemin de conduite de retour à utilisation unique pour un véhicule minier conduit intentionnellement sous commande manuelle loin de l'itinéraire principal automatique prédéterminé ; et
la sélection d'un point d'itinéraire particulier de l'itinéraire principal pour servir de point de destination pour le chemin de conduite ;
et la récupération de données de position du point d'itinéraire sélectionné de l'itinéraire principal.

14. Procédé selon la revendication 11, **caractérisé par**
l'application du processus de recherche de chemin pour trouver un chemin de conduite de retour à utilisation unique pour un véhicule minier qui a divergé inopinément loin de l'itinéraire principal automatique prédéterminé ; et
la sélection d'un point d'itinéraire particulier de l'itinéraire principal pour servir de point de destination pour le chemin de conduite ;
et la récupération de données de position du point d'itinéraire sélectionné.

15. Programme informatique,
**caractérisé en ce que**
le programme informatique comprend un moyen de code de programme configuré pour exécuter le procédé révélé dans l'une quelconque des revendications 11 à 14 quand il est exécuté sur un ordinateur.
